# EUROPÄISCHE PATENTSCHRIFT

(11) **EP 0 316 732 B1**
(45) Veröffentlichungstag und Bekanntmachung des Hinweises auf die Patenterteilung: **03.03.1993**
(21) Anmeldenummer: 88118630.8
(22) Anmeldetag: 09.11.1988
(51) Int. Cl.: C09D 133/08, C09D 133/10, C08G 59/17

(54) **Wässriges Beschichtungsmittel, ein Verfahren zu seiner Herstellung und seine Verwendung**
Aqueous coating, process for its preparation and its use
Revêtement aqueux, son procédé de préparation et son utilisation

(30) Priorität: 17.11.1987 DE 3738932
(43) Veröffentlichungstag der Anmeldung: 24.05.1989
(73) Patentinhaber: BAYER AG, 51368 Leverkusen (DE)
(72) Erfinder: Dhein, Rolf, Dr., D-4150 Krefeld (DE); Wellner, Wolfgang, Dr., D-5060 Bergisch-Gladbach 2 (DE); Bäcker, Lothar, D-4047 Dormagen 5 (DE)

(56) Entgegenhaltungen:
- EP-A- 0 218 906
- EP-A- 0 252 289
- "Römpp's Chemie Lexicon", 9. Auflage, Band 2, 1990, Seiten 1343-1345

## Beschreibung

Die vorliegende Erfindung betrifft wäßrige, lufttrocknende Beschichtungsmittel auf Basis von chemisch eingebaute trocknende Fettsäurereste und chemisch eingebaute Ammoniumgruppen aufweisenden Polyacrylaten, ein Verfahren zu ihrer Herstellung und ihre Verwendung zur Beschichtung von Holz.

Wasserlösliche Bindemittel finden aufgrund dessen, daß bei ihrer Applikation überwiegend das ökologisch völlig unbedenkliche Wasser als Lösungsmittel in die Umwelt emitiert wird, ein zunehmendes Interesse. Es hat deshalb nicht an Versuchen gefehlt, hochwertige Bindemittel mit Wasser als Lösungsmittel zu entwickeln. So sind beispielsweise auf dem Gebiet der Maler- und do-it-yourself-Lacke und dabei insbesondere bei den Holzbeschichtungen zunehmend wasserverdünnbare bzw. wasserlösliche Systeme erhältlich. Auch im industriellen Anwendungsbereich zeigt sich ein großes Interesse an wäßrigen Bindemitteln. Dazu haben die verschärften gesetzlichen Bestimmungen bei der Emission organischer Lösungsmittel im besonderen Maße beigetragen.

Meistens handelt es sich bei den wasserlöslichen Bindemitteln um Alkydharze, die seitenständige, freie Carboxylgruppen aufweisen und nach Neutralisation der Carboxylgruppen mit Aminen wasserlöslich werden (vgl. z.B. AT-PS 180 407, DE-OS 1 917 162, DE-OS 2 323 546 oder DE-AS 2 239 094). Die Neutralisation mit Aminen führt zu einem schwach alkalischen pH-Wert der wäßrigen Bindemittel, was im Zusammenwirken mit den Estergruppen im Polyestermolekül eine geringe Verseifungsstabilität bewirkt. Dies zeigt sich auch in der begrenzten Lagerstabilität der wäßrigen Lacklösungen, die nach allmählichem Absinken des pH-Wertes ausfallen.

Desweiteren weisen diese Bindemittel häufig erhebliche Anteile an wassermischbaren organischen Kolösern auf, die während der Trocknung zusammen mit den anderen flüchtigen Bestandteilen - Wasser und Amin - entweichen. Der ökologische Vorteil, den diese Bindemittel aufgrund ihrer Wasserlöslichkleit aufweisen, wird hierdurch gemindert. Eine Verminderung des Kolöseranteils verschlechtert in der Regel das Verdünnungsverhalten der Bindemittel. Daraus hergestellte Lacke weisen nur geringe Bindemittelgehalte auf.

Auch wäßrige Bindemittel auf Polyacrylatbasis sind bereits bekannt (vgl. z.B. EP-A-0 218 906, DE-OS 2 347 999, DE-OS 2 357 152, DE-OS 2 507 842 und DE-OS 2 531 802). Bei den Beschichtungsmitteln dieser Vorveröffentlichungen handelt es sich um solche auf Basis von anionisch modifizierte, d.h. Carboxylatgruppen aufweisenden Polymerisaten, die in Kombination mit einem Härter insbesondere thermisch aushärtbar sind.

Alle derartigen Beschichtungsmittel sind insbesondere für die Holzbeschichtung weitgehend ungeeignet, da Holzlacke möglichst ohne Hitzebehandlung aushärtbar sein sollten, und insbesondere da bei der Holzbeschichtung die im Lack enthaltenen, die Gegenionen zu den eingebauten Carboxylatgruppen bildenden Amine durch die im Holz natürlicherweise enthaltenen pflanzlichen Gerbstoffe, die in Ullmanns Encyclopädie der technischen Chemie, 3. Auflage, 1960, Band 11, Seite 593 ff. als kompliziert aufgebaute Verbindungen mit zahlreichen phenolischen Hydroxyl- und Carboxylgruppen beschrieben werden, neutralisiert werden. Infolgedessen kommt es beim Eindringen in Holz schnell zu einer Koagulation des Bindemittels.

Es war die der vorliegenden Erfindung zugrundeliegende Aufgabe, neuartige, wäßrige, lufttrocknende Beschichtungsmittel zur Verfügung zu stellen, die insbesondere zur Behandlung von Holz und Holzwerkstoffen geeignet sind. Die Beschichtungsmittel sollten darüber hinaus nur geringe Mengen an organischen Lösungsmitteln aufweisen, keine Amine imitieren und nach den üblichen Verfahren der Beschichtungstechnologie auf Holz auftragbar sein und eine ausreichende Eindringtiefe und Anschlußzeit gewährleisten.

Diese Aufgabe konnte mit der Bereitstellung der nachstehend näher beschriebenen erfindungsgemäßen Beschichtungsmittel gelöst werden.

Gegenstand der Erfindung sind wäßrige Beschichtungsmittel auf der Grundlage von Polyacrylatharzen, dadurch gekennzeichnet, daß die Polyacrylatharze mehrfach ungesättigte, höhere Fettsäurereste und tertiäre Amoniumgruppen eingebaut enthalten.

Gegenstand der Erfindung sind insbesondere die bevorzugten derartigen Beschichtungsmittel, enthaltend ein wasserlösliches, lufttrocknendes Bindemittel sowie gegebenenfalls die in der Lacktechnologie üblichen Hilfs- und Zusatzmittel, dadurch gekennzeichnet, daß das Bindemittel ein Polyacrylat eines über 1000 liegenden Molekulargewichts mit einem Gehalt an chemisch eingebauten mehrfach ungesättigten, höheren Fettsäuren (berechnet als R-COO-, R = Kohlenwasserstoffrest der Fettsäure) von 5 bis 40 Gew.-% und einen Gehalt an chemisch eingebauten Ammoniumgruppen von 50 bis 200 Milliäquivalenten pro 100 g Feststoff darstellt.

Gegenstand der Erfindung ist auch ein Verfahren zur Herstellung derartiger Beschichtungsmittel, welches dadurch gekennzeichnet ist, daß man
A) Epoxidgruppen aufweisende Polyacrylate mit einem Epoxidgruppenäquivalentgewicht von 200 bis 1300 mit
B) gegebenenfalls im Gemisch mit nicht trocknenden Fettsäuren vorliegenden, mehrfach ungesättigten, höheren Fettsäuren im Sinne einer unter Esterbildung ablaufenden Additionsreaktion umsetzt,
C) die in dem Umsetzungsprodukt gemäß B) noch vorliegenden Epoxidgruppen ganz oder teilweise mit sekundären Monoaminen im Sinne einer Additionsreaktion umsetzt,
D) das gemäß C) erhaltene Umsetzungsprodukt durch Zugabe einer organischen Carbonsäure ganz oder teilweise neutralisiert und gleichzeitig oder im Anschluß an die Neutralisation in Wasser löst, wobei
E) der gemäß D) erhaltenen Lösung zu einem beliebigen Zeitpunkt während ihrer Herstellung oder im Anschluß an ihre Herstellung gegebenenfalls aus der Lacktechnologie bekannte Hilfs- und Zusatzmittel einverleibt werden, und wobei die Art und Mengenverhältnisse der Ausgangskomponenten so gewählt werden, daß das im Wasser gelöste Bindemittel das obengenannte Molekulargewicht und den obengnannten Gehalt an trocknenden Fettsäuren und an Ammoniumgruppen aufweist.

Gegenstand der Erfindung ist auch die Verwendung der erfindungsgemäßen Beschichtungsmittel zur Beschichtung von Holz oder von Holzwerkstoffen.

Die als Ausgangsmaterialien A) dienenden, Epoxidgruppen aufweisenden Polyacrylate weisen ein Epoxidäquivalentgewicht von 200 bis 1300, vorzugsweise 300 bis 700 und ein über 700 vorzugsweise von 1000 bis 5000 liegendes Molekulargewicht Mw auf.

Ihre Herstellung gelingt durch an sich bekannte radikalische Polymerisation von Derivaten der Methacryl- und/oder Acrylsäure. Solche sind z.B. Methylmethacrylat, Methacrylat, n- und iso-Butyl-, n-Hexyl-, Cyclohexyl-, 2-Ethylhexyl-, 2-Hydroxyethyl-, Hydroxypropyl-, 2-Ethoxyethyl-, 2-Butoxyethylmethacrylat, 2-Hydroxyethyl-, Hydroxypropyl-, 2-Methoxyethyl-, 2-Butoxyethylacrylat. Desweiteren können als Monomere auch vinylisch ungesättigte Kohlenwasserstoffe wie Styrol und Vinyltoluol verwendet werden. Die beschriebenen Epoxidäquivalente werden durch Verwendung von epoxidierten Monomeren wie z.B. Glycidylacrylat oder Glycidylmethacrylat erreicht.

Die Durchführung der radikalischen Copolymerisation ist dem Fachmann bekannt und wird in der üblichen Fachliteratur wie z.B. Houben-Weyl, Bd. 14/1, S. 24 ff., 4. Aufl., Georg Thieme Verlag, Stuttgart, ausführlich beschrieben. Auf eine ausführliche Erläuterung soll deshalb an dieser Stelle verzichtet werden.

Bei den Fettsäuren B) handelt es sich um die bekannten natürlichen oder synthetischen, mehrfach ungesättigten, höheren Fettsäuren, die zwei oder mehr Doppelbindungen und bis 22, vorzugsweise 14 bis 18 Kohlenstoffatome aufweisen. Beispiele für solche Fettsäuren sind Linolsäure, Linolensäure, Eläostearinsäure, Parinarsäure, Archidonsäure, Clupanodonsäure, Ricinenfettsäure und konjugierte mehrfach ungesättigte Fettsäuren wie z.B. ®Prifac 7967, ®Prifac 7968 und ®Prifac 7969. Bei den letztgenannten drei Säuren handelt es sich um synthetische, konjugiert ungesättigte Fettsäuren mit 18 Kohlenstoffatomen. Diese Säuren stellen Handelsprodukte der Firma Unichema Chemie GmbH dar.

Die beispielhaft genannten, mehrfach ungesättigten Fettsäuren können bei der Durchführung des erfindungsgemäßen Verfahrens selbstverständlich auch im Gemisch mit einfach ungesättigten und/oder gesättigten Fettsäuren eingesetzt werden.

In der ersten Stufe des erfindungsgemäßen Verfahrens werden die Epoxidgruppen aufweisenden Polymerisate A) mit den Fettsäuren oder Fettsäuregemischen B) unter Inertgasatmosphäre bei 80 bis 120°C, vorzugsweise 100 bis 120°C umgesetzt. Dabei wird die Fettsäure unter Öffnung des Epoxidringes und unter Esterbildung an das Copolymermolekül angebunden. Die Menge der trocknenden Fettsäuren wird im übrigen so bemessen, daß in den letztendlich erhaltenen erfindungsgemäßen Bindemitteln 5 bis 40, vorzugsweise 10 bis 30 Gew.-% an eingebauten trocknenden Fettsäureresten (berechnet als R-COO-, R = Kohlenwasserstoffrest der trocknenden Fettsäuren) vorliegen.

Die in den so erhaltenen Umsetzungsprodukten noch verbleibenden Epoxidgruppen werden anschließend in einem zweiten Reaktionsschritt zumindest teilweise, vorzugsweise vollständig mit einem sekundären Amin der allgemeinen Formel 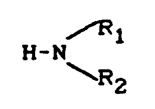
umgesetzt, wobei
- R₁ und R₂: für gleiche oder verschiedene Reste stehen und gegebenenfalls einen Hydroxylsubstituenten oder Etherbrücken aufweisende, Alkylreste mit bis zu 8, vorzugsweise mit 1 bis 4 Kohlenstoffatomen bedeuten.

Geeignete Amine sind beispielsweise Dimethylamin, Diethylamin, Dipropylamin, Di-n-butylamin, Diethanolamin oder Diisopropanolamin.

Vorzugsweise wird bei dieser Umsetzung so vorgegangen, daß man das aus der ersten Reaktionsstufe resultierende Zwischenprodukt mit einem Überschuß oder der äquivalenten Menge eines derartigen Amins bzw. eines Gemischs derartiger Amine bei 60 bis 100°C zur Reaktion bringt. Unter Öffnung der Epoxidringe entstehen hierbei durch Addition der Amine Polymere mit eingebauten Aminogruppen. Falls das Amin bei dieser Reaktion im Überschuß eingesetzt wird, wird der nach Beendigung der Umsetzung vorliegende Aminüberschuß vorzugsweise unter vermindertem Druck destillativ entfernt.

In einem dritten Reaktionsschritt werden dann die eingebauten Aminogruppen ganz oder teilweise mit einer Säure neutralisiert, um die Wasserlöslichkeit der Bindemittel zu erreichen. Als Säuren eignen sich insbesondere organische Carbonsäuren mit 1 bis 5 Kohlenstoffatomen wie z.B. Ameisensäure, Essigsäure, Propionsäure, Apfelsäure oder Dimethylolpropionsäure.

Der Überschuß der in der ersten Stufe des erfindungsgemäßen Verfahrens eingesetzten, Epoxidgruppen aufweisenden Polymerisate A) gegenüber den Fettsäuren bzw. Fettsäuregemischen B), d.h. die Menge der überschüssigen Epoxidgruppen in dem hierbei anfallenden Umsetzungsprodukt, sowie die Menge des in der zweiten Reaktionsstufe eingebauten Amins und der Neutralisationsgrad der eingebauten Aminogruppen werden im übrigen so gewählt, daß in den letztendlich erhaltenen Bindemitteln 50 bis 200, vorzugsweise 50 bis 120 Milliäquivalente pro 100 g Feststoff an chemisch eingebauten Ammoniumgruppen vorliegen. Die Menge der Ammoniumgruppen muß auf jeden Fall ausreichend sein, um die Wasserlöslichkeit der erfindungsgemäßen Bindemittel zu gewährleisten.

Gleichzeitig oder im Anschluß an die Zugabe der Säuren erfolgt dann die Zugabe des Wassers zwecks Herstellung von wäßrigen Lösungen der erfindungsgemäßen Bindemittel.

In den erfindungsgemäßen Beschichtungsmitteln können die aus der Lacktechnologie bekannten Hilfs- und Zusatzmittel wie beispielsweise Pigmente, Füllstoffe, Verlaufhilfsmittel, Sikkative oder Hilfslösungsmittel vorliegen. Es ist jedoch hervorzuheben, daß es einer der Vorteile der erfindungsgemäßen Beschichtungsmittel ist, daß ihr Gehalt an Hilfslösungsmitteln sehr niedrig, im allgemeinen unter 15 Gew.-%, bezogen auf gebrauchsfertigen Lack, gehalten werden kann. Geeignete Hilfslösungsmittel sind beispielsweise Butylglykol, Methoxypropanol, Ethylenglykolmonomethylether, Ethylenglykolmonoethylether, Butoxypropanol oder Gemische derartiger Lösungsmittel.

Die Hilfs- und Zusatzmittel können sowohl den Ausgangsmaterialien zur Herstellung der erfindungsgemäßen Bindemittel oder den letztendlich erhaltenen wäßrigen Lösungen einverleibt werden. Die gegebenenfalls vorliegenden Hilfslösungsmittel kommen oftmals bereits bei der Herstellung der Copolymerisate A) zum Einsatz, während die Sikkative den Beschichtungsmitteln im allgemeinen erst nach ihrer Herstellung einverleibt werden.

Die erfindungsgemäßen Beschichtungsmittel stellen vielseitig verwendbare, nach allen bekannten Methoden der Beschichtungstechnologie verarbeitbare Anstrichmittel dar und eignen sich insbesondere zur Herstellung von Holz oder Holzwerkstoffen. Die als wäßrige Lösung vorliegenden, lufttrocknenden Holzlacke lassen sich im Gegensatz zu Dispersionen wie bisher bekannte Lacklösungen verarbeiten, verbinden sich unter dem Einfluß von Luftsauerstoff intensiv mit den Holzuntergründen, trocknen sehr rasch und liefern Filme mit hochwertigen mechanischen Eigenschaften. Sie geben allenfalls nur geringe Menge an Hilfslösungsmitteln an die Umgebung ab und enthalten keine bei der Filmbildung flüchtigen Amine und Neutralisationsmittel.

Die in den nachfolgenden Beispielen angegebenen Teile und Prozentsätze beziehen sich jeweils auf das Gewicht.

### Herstellung der Klarlacke

Die nach den beschriebenen Beispielen erhaltenen wäßrigen Bindemittellösungen wurden durch Zugabe von deionisiertem Wasser auf eine streichbare Konsistenz eingestellt. Zur Verhinderung von Hautbildung wurden die Lösungen mit 1 % ®Ascinin R conz - ein Hautverhinderungsmittel auf Oximbasis der Fa. Bayer AG - versetzt. Die Sikkativierung erfolgte mit Co-octoat aqua - eine 7 % gebundenes Kobalt enthaltene Lösung der Fa. Gebr. Borchers AG. Das Bindemittel nach Beispiel 1 wurde mit 0,04 % und das aus Beispiel 2 erhaltene Bindemittel mit 0,02 % Kobalt auf festes Bindemittel sikkativiert. Zur lacktechnischen Prüfung wurden die Lösungen mit 180 µm Naßfilmdicke auf Holz und Glasplatten aufgezogen und hinsichtlich Trocknung, optisches Aussehen und Schwitzwasserbeständigkeit untersucht. Die Kontrolle der Wasserbeständigkeit erfolgte durch Auflegen von wassergetränkten Wattebauschen an 7 Tage alten Filmen und Abdeckung der Auflagestelle mit einer Petrischale bis zur sichtbaren Veränderung der Oberfläche.

### Beispiel 1

### Herstellung eines Epoxidgruppen aufweisdenden Copolymeren:

Ein Gemisch von 1018,9 Teilen Styrol, 526,2 Teilen Methacrylsäuremethylester, 41,9 Teilen Butylacrylat, 743,7 Teilen Glycidylmethacrylat, 70,8 Teilen t-Butylperoctoat und 23,8 Teilen Dodecanthiol wird innerhalb von 2,5 Stunden bei 110°C in 1050 Teile Butylglykol getropft. Nach 3-stündigem Nachreagieren bei 110°C wird durch 3 Zugaben von je 4,17 Teilen t-Butylperoctoat bis zum vollständigen Umsatz der Monomeren gefahren. Nach der letzten Zugabe wurde noch 2 Stunden bei 110°C gerührt. Die Prüfung auf vollständigen Umsatz erfolgte durch Bestimmung der Auslaufviskosität nach DIN 53 211 40 %ig in Dimethylformamid und durch Festkörperbestimmung. Dazu wird eine dünnschichtige Probe eine Stunde auf 120°C erhitzt und dann die nichtflüchtigen Bestandteile ausgewogen. Nach der dritten Peroctoatzugabe erwiesen sich Festkörper und Viskosität als weitgehend konstant. Der Festkörper ergab sich zu 73,7 % und die Viskosität betrug 30 sec (DIN 53211). Das theoretische Epoxidäquivalentgewicht beträgt 465,6.

### Erfindungsgemäßes Verfahren:

2483,5 Teile der 73,7 %igen Copolymerlösung in Butylglykol wurden mit 271,8 Teilen Prifac 7968 bei 120°C bis zu einer Säurezahl 1 umgesetzt. Nach 2 Stunden wurde eine SZ von 0,8 gemessen. Der Festkörpergehalt betrug 74,2 %. Die Viskosität auf 40 % mit Dimethylformamid verdünnt betrug nach DIN 53 211 29 sec. Der restliche Epoxidgehalt betrug 1,56 % und weicht somit nur geringfügig vom theoretischen Wert, der zu 1,60 % errechnet wurde, ab. Die Umsetzung wurde unter N₂-Atmosphäre ausgeführt.

158,7 Teile Diethylamin wurden in einer mit Rückflußkühler, beheizbarem Tropftrichter und Kontaktthermometer ausgestatteten Rührapparat vorgelegt. Das Amin wurde auf 50°C aufgeheizt. In das vorgelegte Amin wurden über den beheizten Tropftrichter 1800 Tle. der genannten 74,2 %igen Lösung innerhalb von 30 min zulaufen gelassen. Die Temperatur stieg dabei auf 100°C an. Nach der Zugabe wurde noch 4 h bei 100°C gerührt. Unter vermindertem Druck wurden 31,4 Tle. Diethylamin, die im Überschuß vorgelegt waren, abdestilliert. Das erhaltene Polymere wies einen Gehalt an Aminogruppen von 115,5 Milliäquivalenten pro 100 g Feststoff auf. Der Festkörper ergab sich zu 77,6 %. Die Viskosität wurde nach DIN 53 211 in Dimethylformamid mit 39 sec gemessen.

Nach Neutralisation von 86,1 % der vorliegenden Aminogruppen mit Ameisensäure wurde durch portionsweise Zugabe von Wasser auf einen Feststoffgehalt von 24,4 % verdünnt. Dabei wurde eine klare Lösung erhalten.

### Beispiel 2

### Herstellung eines Epoxidgruppen aufweisenden Copolymeren:

Nach dem in Beispiel 1 beschriebenen Verfahren wurden in der ersten Stufe 435,5 Teile Styrol, 510,9 Teile Methacrylsäuremethylester, 1359,2 Teile Glycidylmethacrylat, 64,8 Teile t-Butylperoctoat und 55,6 Teile Dodecanthiol in 1049,9 Teilen Methoxypropanol copolymerisiert. Wie in Beispiel 1 wurden nach gleichem zeitlichen Ablauf Peroctoatzugaben von jeweils 4,02 Teilen gemacht. Nach insgesamt 6 Zugaben war die Viskosität und der Festkörper weitgehend konstant.

Der Festkörper der erhaltenen Lösung wurde mit 73,3 % und die Viskosität 40 %ig in Methoxypropanol nach DIN 53 211 mit 77 sec. ermittelt. Das Epoxidäquivalentgewicht errechnete sich zu 256.

### Erfindungsgemäßes Verfahren:

2707,5 Teile der erhaltenen Polymerlösung wurden verfahrensmäßig wie in Beispiel 1 beschrieben unter Inertgasatmosphäre mit 943 Teilen Sojaölfettsäure bis zu einer Säurezahl von 0,3 umgesetzt. Die Reaktionszeit betrug 4,5 Stunden. Das Reaktionsprodukt wies einen Festkörpergehalt von 78,8 % und eine Viskosität von 53 sec., 40 %ig in Methoxypropanol gemessen, auf. Der Epoxidgehalt der Lösung ergab sich zu 1,05 %. Das entspricht einem Epoxidäquivalentgewicht von 1200,8.

Anschließend wurden 238,0 Teile Diethylamin mit 2500 Teilen der in der genannten 78,8 %igen Lösung umgesetzt. Nach 3 Stunden bei 100°C wurde ein Festkörpergehalt von 78,5 % gemessen. Die Viskosität ergab sich 40 %ig in Methoxypropanol zu 66 sec. Im Wasserstrahlvakuum wurde der eingesetzte Aminüberschuß destillativ entfernt.

Das erhaltene Polymere wies einen Gehalt an Aminogruppen von 93,4 Milliäquivalenten pro 100 g Feststoff auf.

Nach Neutralisation zu 85 % der Aminogruppen mit Essigsäure wurde durch portionsweise Zugabe von Wasser auf 20,1 % verdünnt. Dabei wurde eine klare Lösung erhalten, die sich durch weitere Zugabe von Wasser bis auf 10 % klar verdünnen läßt.

### Ergebnise der Lackprüfung

Der nach Beispiel 1 erhältliche Klarlack trocknet in 2 Stunden, während der nach Beispiel 2 in etwa, 2,5 Stunden trocknet. Auf Holz wurden gut haftende und eindringende Lackierungen erhalten, die optisch eine deutliche Hervorhebung der Holzmaserung zeigen. Dieser Effekt wird vom Fachmann als Anfeuerung bezeichnet und ist wegen seiner dekorativen Wirkung auf Holz durchaus erwünscht.

Der Klarlack gemäß Beispiel 1 wurde desweiteren auf Glasplatten aufgetragen und wie beschrieben einem Schwitzwassertest unterzogen. 25 Stunden nach Auflegen des wassergetränkten Wattebausches waren keine sichtbaren Veränderungen der Lackoberfläche feststellbar. Erst nach 33 Stunden wurde eine leichte Trübung sichtbar.

## Patentansprüche

1. Wäßriges Beschichtungsmittel auf der Grundlage von Polyacrylatharzen, dadurch gekennzeichnet, daß die Polyacrylatharze mehrfach ungesättigte, höhere Fettsäurereste und tert.-Ammoniumgruppen eingebaut enthalten.

2. Wäßriges Beschichtungsmittel, enthaltend ein wasserlösliches, lufttrocknendes Bindemittel sowie gegebenenfalls die in der Lacktechnologie üblichen Hilfs- und Zusatzmittel, dadurch gekennzeichnet, daß das Bindemittel ein Polyacrylat eines über 1000 liegenden Molekulargewichts mit einem Gehalt an chemisch eingebauten mehrfach ungesättigten, höheren Fettsäuren (berechnet als R-COO-, R = Kohlenwasserstoffrest der Fettsäure) von 5 bis 40 Gew.-% und einen Gehalt an chemisch eingebauten Ammoniumgruppen von 50 bis 200 Milliäquivalenten pro 100 g Feststoff enthält.

3. Verfahren zur Herstellung von wäßrigen Beschichtungsmitteln gemäß Anspruch 1 und 2, dadurch gekennzeichnet, daß man
A) Epoxidgruppen aufweisende Polyacrylate mit einem Epoxidgruppenäquivalentgewicht von 200 bis 1300 mit
B) gegebenenfalls im Gemisch mit nicht trocknen-Fettsäuren vorliegenden, mehrfach ungesättigten, höheren Fettsäuren im Sinne einer unter Esterbildung ablaufenden Additionsreaktion umsetzt,
C) die in dem Umsetzungsprodukt gemäß B) noch vorliegenden Epoxidgruppen ganz oder teilweise mit sekundären Monoaminen im Sinne einer Additionsreaktion umsetzt,
D) das gemäß C) erhaltene Umsetzungsprodukt ganz oder teilweise durch Zugabe einer organischen Carbonsäure ganz oder teilweise neutralisiert und gleichzeitig oder im Anschluß an die Neutralisation in Wasser löst, wobei
E) der gemäß D) erhaltenen Lösung zu einem beliebigen Zeitpunkt während ihrer Herstellung oder im Anschluß an ihre Herstellung gegebenenfalls aus der Lacktechnologie bekannte Hilfs- und Zusatzmittel einverleibt werden, und wobei die Art und Mengenverhältnisse der Ausgangskomponenten so gewählt werden, daß das im Wasser gelöste Bindemittel das in Anspruch 2 genannte Molekulargewicht und den in Anspruch 2 genannten Gehalt an trocknenden Fettsäuren und an Ammoniumgruppen aufweist.

4. Verwendung des Beschichtungsmittels gemäß Anspruch 1 und 2 zur Beschichtung von Holz oder von Holzwerkstoffen.

## Claims

1. A water-based coating composition based on polyacrylate resins, characterized in that the polyacrylate resins contain incorporated polyunsaturated higher fatty acid residues and tert. ammonium groups.

2. A water-based coating composition containing a water-soluble air-drying binder and optionally the auxiliaries and additives typically used in lacquer technology, characterized in that the binder contains a polyacrylate having a molecular weight above 1,000 and containing 5 to 40% by weight chemically incorporated polyunsaturated higher fatty acids (expressed as R-COO-, R = hydrocarbon radical of the fatty acid) and 50 to 200 milliequivalents chemically incorporated ammonium groups per 100 g solids.

3. A process for the production of the water-based coating compositions claimed in claims 1 and 2, characterized in that
A) epoxide-functional polyacrylates having an epoxide equivalent weight of 200 to 1,300
are reacted
B) with polyunsaturated higher fatty acids optionally present in admixture with non-drying fatty acids in an ester-forming addition reaction,
C) the epoxide groups still present in the reaction product according to B) are completely or partly reacted with secondary monoamines in an addition reaction,
D) the reaction product obtained in C) is completely or partly neutralized by addition of an organic carboxylic acid and are simultaneously or subsequently dissolved in water,
E) auxiliaries and additives known from lacquer technology are optionally incorporated in the solution obtained in D) at any stage during its production or thereafter, the type and quantities of the starting components being selected so that the binder dissolved in water has the molecular weight mentioned in claim 2 and the content of drying fatty acids and ammonium groups mentioned in claim 2.

4. The use of the coating composition claimed in claims 1 and 2 for coating wood or wood materials.

## Revendications

1. Composition aqueuse de revêtement à base de résines de polyacrylates, caractérisée en ce que les résines de polyacrylates contiennent, incorporés, des restes d'acides gras supérieurs polyinsaturés et des groupes ammonium tertiaires.

2. Composition aqueuse de revêtement, contenant un liant hydrosoluble séchant à l'air ainsi que, le cas échéant, les substances auxiliaires et les additifs d'emploi classique dans la technologie des peintures, caractérisée en ce que le liant contient un polyacrylate de poids moléculaire supérieur à 1000 ayant une teneur en acides gras supérieurs polyinsaturés chimiquement incorporés (calculée sur la base de R-COO-, R étant le reste hydrocarboné de l'acide gras) de 5 à 40 % en poids et une teneur en groupes ammonium incorporés chimiquement de 50 à 200 milli-équivalents pour 100 g de matière solide.

3. Procédé de production de compositions aqueuses de revêtement suivant les revendications 1 et 2, caractérisé en ce que
A) on fait réagir des polyacrylates porteurs de groupes époxyde ayant un poids équivalent de groupes époxyde de 200 à 1300 avec
B) des acides gras supérieurs polyinsaturés éventuellement présents en mélange avec des acides gras non siccatifs, dans le sens d'une réaction d'addition se déroulant avec formation d'un ester,
C) on fait réagir en totalité ou en partie les groupes époxyde encore présents dans le produit réactionnel selon B) avec des mono-amines secondaires dans le sens d'une réaction d'addition,
D) on neutralise en totalité ou en partie le produit réactionnel obtenu conformément à C) par addition d'un acide carboxylique organique et on le dissout dans l'eau en même temps ou à la suite de la neutralisation,
E) en incorporant à la solution obtenue conformément à D) à un moment quelconque au cours de sa préparation ou à la suite de sa préparation des substances auxiliaires et des additifs éventuellement connus dans la technologie des peintures, et en choisissant la nature et les rapports de quantités des composants de départ de manière que le liant dissous dans l'eau présente le poids moléculaire mentionné dans la revendication 2 et la teneur, mentionnée dans la revendication 2, en acides gras siccatifs et en groupes ammonium.

4. Utilisation de la composition de revêtement suivant les revendications 1 et 2 pour l'enduction de bois ou de matériaux à base de bois.
